# EUROPEAN PATENT APPLICATION

(11) **EP 2 040 476 A2**
(43) Date of publication of application: **25.03.2009**
(21) Application number: 08013672.4
(22) Date of filing: 30.07.2008
(51) Int. Cl.: H04N 9/04

(54) **Image sensor and image data processing system**

(30) Priority: 21.09.2007 US 902458
(71) Applicant: VP Assets Limited, Hong Kong (HK)
(72) Inventor: Phan, Gia Chuong, Kowloon, Hong Kong (HK)
(74) Representative: Goddar, Heinz J.

(57) **Abstract**

An image data processing system. According to the arrangement of the image sensor, two color dots having higher light intensity than the other two color dots in a white balance status are disposed on diagonal positions of the pixel group. The higher light intensity color such as green and white carry more luminance information than red and blue colors so that high intensity colors of green and white shall be arranged in diagonal line to improve the perceived luminance balance so that the distribution of green and white dots in an image sensor is more homogeneous and visual perception friendly than if green and white dots are arranged on vertical or horizontal lines. On the other hand, such diagonal arrangement of four primary colors image sensor is aligned with the four primary colors pixel pattern of RGBW display.

## Description

### CROSS-REFERENCE TO RELATED APPLICATIONS

This is a continuation-in-part of U.S. Patent Application Serial No. 11/103,590 filed in April 12, 2005; U.S. Patent Application Serial No. 11/012,202, filed on December 16, 2004; U.S. Patent Application Serial No. 10/727,545, filed on December 5, 2003; U.S. Patent Application Serial No. 10/339,491, filed on January 10, 2003; U.S. Patent Application Serial No. 09/151,287, filed September 11, 1998; and claims priority under 35 U.S.C. §119 and 37 C.F.R. §1.55(a) of German Application No. 197 41 132.0, filed September 13, 1997.

### BACKGROUND OF THE INVENTION

### 1. Field of the Invention

The invention relates to an image sensor and an image data processing system.

### 2. Description of the Related Art

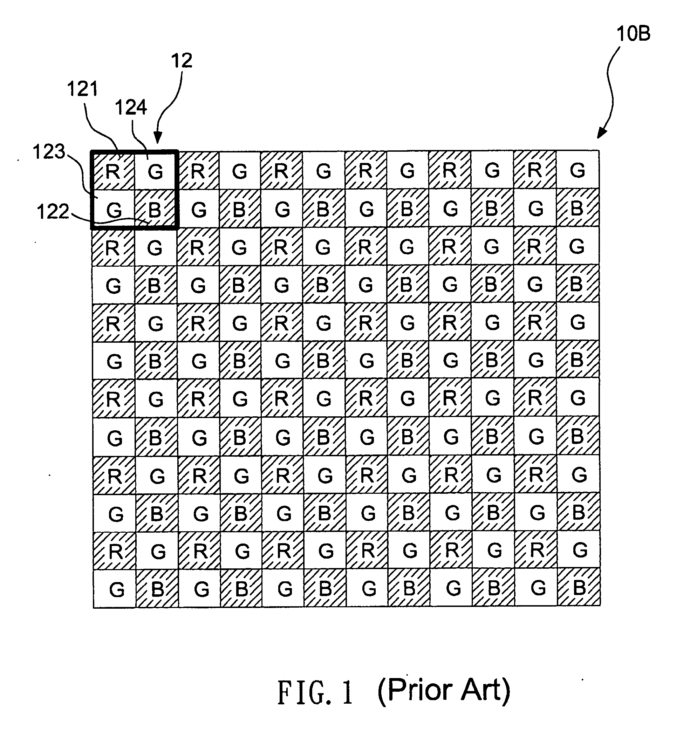

Referring to FIG. 1, conventional image sensors are based on Bayer pattern of RGGB where each single color dot is then interpolated to create a RGB pixel, using neighboring dots information, then to be displayed on a RGB display. The conventional image sensor 10B comprises a plurality of pixel groups 12. Each pixel group 12 comprises four quadrate dots arranged in a 2×2 matrix. Each pixel groups 12 comprises a first color dot 121 (R), a second color dot 122 (B), a third color dot 123 (G) and a fourth color dot 124 (G). The first color dot 121 is a red dot (R), the second color dot 122 is a blue dot (B), and the third color dot 123 and the fourth color dot 124 are green dots (G).

New Displays such as US Patent Application serial number 103590 show different proprietary four primary colours displays, typically RGBW, where a corresponding four primary colours image sensor is needed to minimize the converting steps from Bayer pattern to RGB pattern and then to RGBW pattern to be displayed on a proprietary RGBW display.

Therefore, it is necessary to provide an image sensor and an image data processing system so as to solve the above problem.

### SUMMARY OF THE INVENTION

One objective of the present invention is to provide an image sensor. The image sensor comprises a plurality of pixel groups, for providing a first data of a pixel arrangement formed by the pixel groups, each pixel group comprising a plurality of dots arranged in a predetermined identical matrix form, each pixel group having at least one first color dot, at least one second color dot, at least one third color dot and at least one fourth color dot, the pixel groups arranged in a matrix manner so as to form the image sensor, wherein the first color dot and the second color dot have higher light intensity than the third color dot and the fourth color dot in a white balance status, the first color dot and the second color dot are disposed on diagonal positions of the predetermined identical matrix of the pixel group, and each color dot represents a luminance and a chrominance of a corresponding full color pixel data by grouping with neighboring dots to form a plurality of overlapping full color dynamics pixel groups.

In a white balance status, the red color dot and the blue color dot have lower light intensity than the green color dot and the white color dot. Besides, higher light intensity color such as green and white carry more luminance information than red and blue colors so that high intensity colors of green and white shall be arranged in diagonal line to improve the perceived luminance balance so that the distribution of green and white dots in an image sensor is more homogeneous and visual perception friendly than if green and white dots are arranged on vertical or horizontal lines. On the other hand, such diagonal arrangement of four primary colors image sensor is aligned with the four primary colors pixel pattern of RGBW display in US Patent Application serial number 11/103,590.

Another objective of the present invention is to provide an image data processing system. The image data processing system comprises an image sensor, a color correction device, a gamma correction device and a data output device. The image sensor is used for capturing an image, and the image sensor comprises a plurality of pixel groups for providing a first data of a pixel arrangement formed by the pixel groups. Each pixel group comprises a plurality of dots arranged in a predetermined identical matrix form. Each pixel group has at least one first color dot, at least one second color dot, at least one third color dot and at least one fourth color dot, the pixel groups arranged in a matrix manner so as to form the image sensor. Each color dot has a plurality of sides adjacent to the other dots with different color, and the first color dot and the second color dot have higher light intensity than the third color dot and the fourth color dot in a white balance status, the first color dot and the second color dot are disposed on diagonal positions of the predetermined identical matrix of the pixel group. Each color dot represents a luminance and a chrominance of a corresponding full color pixel data by grouping with neighboring dots to form a plurality of overlapping full color dynamics pixel groups. The color correction device is used for converting the first data to a second data. The gamma correction device is used for converting the second data to a third data. The data output device is used to output the third data to a four primary colors display.

Therefore, the image sensor and the image data processing system of the invention can capture the luminance and the chrominance of an image, correct colors and gamma and then output to a proprietary four colors display within the same color space without degrading the visual perception of the image and video quality.

### BRIEF DESCRIPTION OF THE DRAWINGS

Further advantageous measures are described in the dependent claims. The invention is shown in the attached drawing and is described hereinafter in greater detail.

**FIG. 1** shows an arrangement of a conventional image sensor;

**FIG. 2A** shows an arrangement of an image sensor, according to a first embodiment of the invention;

**FIGS. 2B** to **2H** show arrangements of the pixel group, according to the first embodiment of the invention;

**FIG. 3** shows an arrangement of an image sensor, according to a second embodiment of the invention; and

**FIG. 4** shows the block diagram of the image data processing system, according to the invention.

### DETAILED DESCRIPTION OF THE INVENTION

According to the invention, an image sensor comprises a plurality of pixel groups. Each pixel group comprises a plurality of dots arranged in a predetermined identical matrix form. Each pixel group having at least one first color dot, at least one second color dot, at least one third color dot and at least one fourth color dot. The pixel groups arranged in a matrix manner so as to form the image sensor. Wherein each color dot has a plurality of sides adjacent to the other dots with different color. The first color dot and the second color dot have higher light intensity than the third color dot and the fourth color dot in a white balance status. The first color dot and the second color dot are disposed on diagonal positions of the predetermined identical matrix of the pixel group. Each color dot represents a luminance and a chrominance of a corresponding full color pixel data by grouping with neighboring dots to form a plurality of overlapping full color dynamics pixel groups.

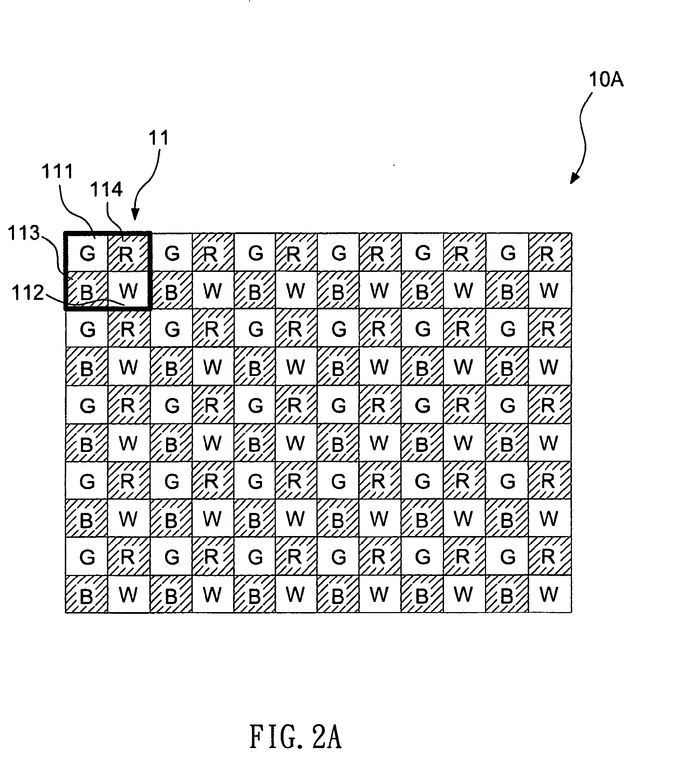

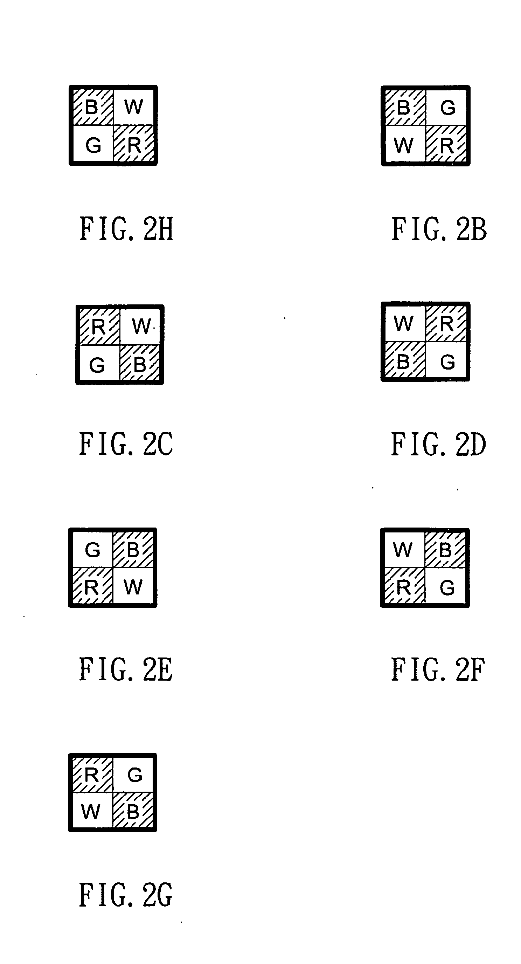

Referring to FIG. 2A, according to the invention, an image sensor 10A of a first embodiment comprises a plurality of pixel groups 11. Each pixel group comprises four quadrate dots arranged in a 2 × 2 matrix. Each pixel groups 11 comprises a first color dot 111 (G), a second color dot 112 (W), a third color dot 113 (B) and a fourth color dot 114 (R). The first color dot 111 is a green dot (G), the second color dot 112 is a white color dot (W), and the third color dot 113 is a blue dot (B). The fourth color dot 114 is a red dot (R).

The first color dot 111 (G) and the second color dot 112 (W) have higher light intensity than the third color dot 113 (B) and the fourth color dot 114 (R) in a white balance status. Therefore, the first color dot 111 (G) and the second color dot 112 (W) are disposed on diagonal positions of the pixel group 11. That is, the first color dot 111 (G) is disposed on a first column and a first row position of the pixel group 11, and the second color dot 112 (W) is disposed on a second column and a second row position of the pixel group 11. In the other embodiments, the other arrangements of pixel groups are shown in FIG. 2B to FIG. 2H.

Generally, in a white balance status, the red color dot and the blue color dot have lower light intensity than the green color dot and the white color dot. Besides, higher light intensity color such as green and white carry more luminance information than red and blue colors so that high intensity colors of green and white shall be arranged in diagonal line to improve the perceived luminance balance so that the distribution of green and white dots in an image sensor is more homogeneous and visual perception friendly than if green and white dots are arranged on vertical or horizontal lines. On the other hand, such diagonal arrangement of four primary colors image sensor is aligned with the four primary colors pixel pattern of RGBW display in US Patent Application serial number 11/103,590.

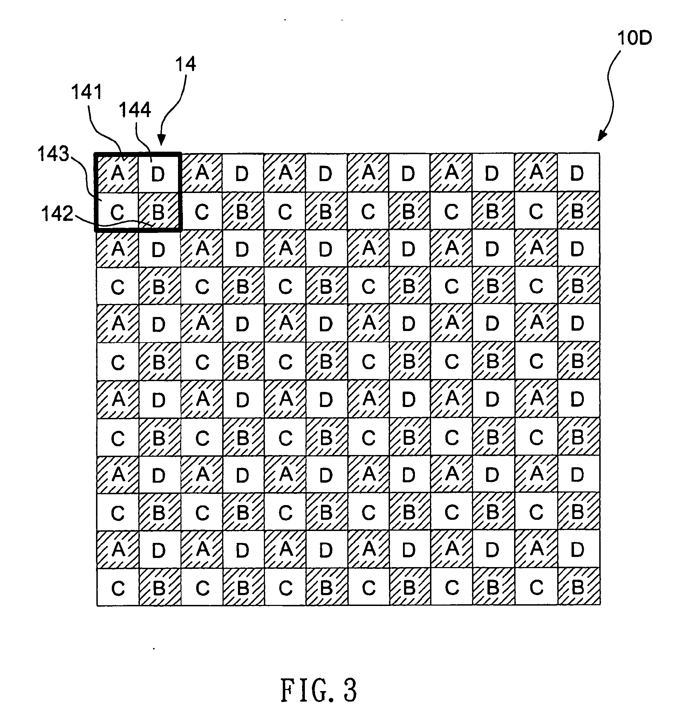

Referring to FIG. 3, according to the invention, an image sensor 10D of a second embodiment comprises a plurality of pixel groups 14. Each pixel group comprises four quadrate dots arranged in a 2 × 2 matrix. Each pixel groups 14 comprises a first color dot 143 (C), a second color dot 144 (D), a third color dot 141 (A) and a fourth color dot 142 (B). The first color dot 143, the second color dot 144, the third color dot 141 and the fourth color dot 142 do not be limited to any color.

If the first color dot 143 (C) and the second color dot 144 (D) have higher light intensity than the third color dot 141 (A) and the fourth color dot 142 (B) in a white balance status, the first color dot 143 (C) and the second color dot 144 (D) are disposed on diagonal positions of the pixel group 14. That is, the first color dot 143 (C) is disposed on a first column and a second row position of the pixel group 14, and the second color dot 144 (D) is disposed on a second column and a first row position of the pixel group 14.

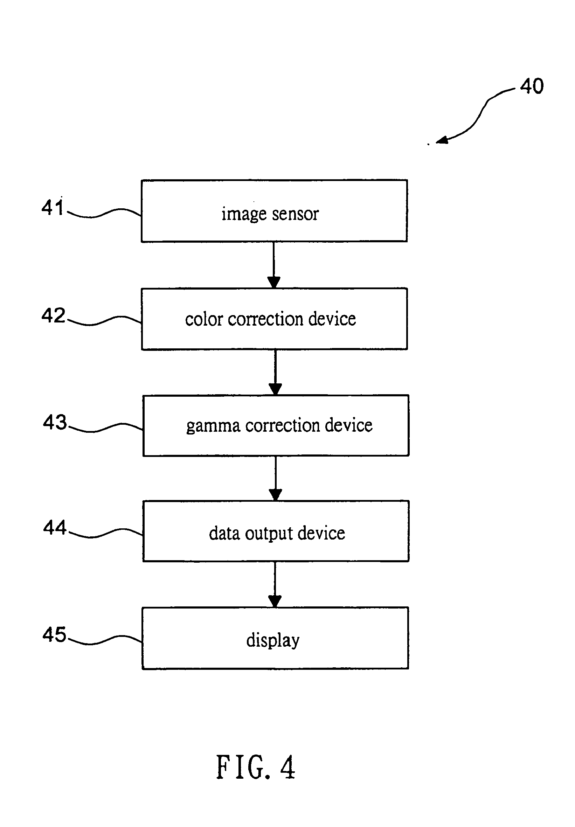

Referring to FIG. 4, according to the invention, an image data processing system 40 comprises an image sensor 41, a color correction device 42, a gamma correction device 43 and a data output device 44. The image sensor 41 is used for capturing an image, and the image sensor 41 comprises a plurality of pixel groups for providing a first data of a pixel arrangement formed by the pixel groups. Each pixel group comprises a plurality of dots arranged in a predetermined identical matrix form. Each pixel group has at least one first color dot, at least one second color dot, at least one third color dot and at least one fourth color dot, the pixel groups arranged in a matrix manner so as to form the image sensor. Each color dot has a plurality of sides adjacent to the other dots with different color, and the first color dot and the second color dot have higher light intensity than the third color dot and the fourth color dot in a white balance status, the first color dot and the second color dot are disposed on diagonal positions of the predetermined identical matrix of the pixel group. Each color dot represents a luminance and a chrominance of a corresponding full color pixel data by grouping with neighboring dots to form a plurality of overlapping full color dynamics pixel groups. For example, the first color dot is a green dot, the second color dot is a white dot, the third color dot is a blue dot and the fourth color dot is a red dot, as shown in FIG. 2A.

The color correction device 52 is used for converting the first data to a second data. The gamma correction device 53 is used for converting the second data to a third data. The data output device 44 is used to output the third data to a four primary colors display. The image data processing system 4 further comprises a display 45 for displaying the third data. The third data are 4 colors raw data, and are outputted to the display. Preferably, the display 45 is a corresponding 4 colors display with the same arrangement of the image sensor, for example, the arrangement as shown in FIG. 2A.

Therefore, the image sensor and the image data processing system of the invention can capture the luminance and the chrominance of an image, correct colors and gamma and then output to a proprietary four colors display within the same color space without degrading the visual perception of the image and video quality.

While embodiments of the present invention has been illustrated and described, various modifications and improvements can be made by those skilled in the art. The embodiments of the present invention are therefore described in an illustrative, but not restrictive, sense. It is intended that the present invention may not be limited to the particular forms as illustrated, and that all modifications which maintain the spirit and scope of the present invention are within the scope as defined in the appended claims.

## Claims

1. An image sensor for capturing an image, comprising:
a plurality of pixel groups, for providing a first data of a pixel arrangement formed by the pixel groups, each pixel group comprising a plurality of dots arranged in a predetermined identical matrix form, each pixel group having at least one first color dot, at least one second color dot, at least one third color dot and at least one fourth color dot, the pixel groups arranged in a matrix manner so as to form the image sensor,
wherein each color dot has a plurality of sides adjacent to the other dots with different color, and the first color dot and the second color dot have higher light intensity than the third color dot and the fourth color dot in a white balance status, the first color dot and the second color dot are disposed on diagonal positions of the predetermined identical matrix of the pixel group, and each color dot represents a luminance and a chrominance of a corresponding full color pixel data by grouping with neighboring dots to form a plurality of overlapping full color dynamics pixel groups.

2. The image sensor according to Claim 1, wherein the first color dot is a green dot, the second color dot is a white dot, the third color dot is a blue dot and the fourth color dot is a red dot.

3. The image sensor according to Claim 1, wherein the pixel group comprises four quadrate dots arranged in a 2×2 matrix.

4. The image sensor according to Claim 1, wherein the first color dot is disposed on a first column and a first row position of the pixel group, and the second color dot is disposed on a second column and a second row position of the pixel group.

5. The image sensor according to Claim 1, wherein the first color dot is disposed on a second column and a first row position of the pixel group, and the second color dot is disposed on a first column and a second row position of the pixel group.

6. The image sensor according to Claim 1, wherein the first color dot is disposed on a first column and a second row position of the pixel group, and the second color dot is disposed on a second column and a first row position of the pixel group.

7. The image sensor according to Claim 1, wherein the first color dot is disposed on a second column and a second row position of the pixel group, and the second color dot is disposed on a first column and a first row position of the pixel group.

8. An image data processing system, comprising:
an image sensor for capturing an image, the image sensor comprising a plurality of pixel groups, for providing a first data of a pixel arrangement formed by the pixel groups, each pixel group comprising a plurality of dots arranged in a predetermined identical matrix form, each pixel group having at least one first color dot, at least one second color dot, at least one third color dot and at least one fourth color dot, the pixel groups arranged in a matrix manner so as to form the image sensor, wherein each color dot has a plurality of sides adjacent to the other dots with different color, and the first color dot and the second color dot have higher light intensity than the third color dot and the fourth color dot in a white balance status, the first color dot and the second color dot are disposed on diagonal positions of the predetermined identical matrix of the pixel group, and each color dot represents a luminance and a chrominance of a corresponding full color pixel data by grouping with neighboring dots to form a plurality of overlapping full color dynamics pixel groups;
a color correction device for converting the first data to a second data; and
a gamma correction device for converting the second data to a third data;
a data output device for outputting the third data to a four primary colors display.

9. The image data processing system according to Claim 8, wherein the first color dot is a green dot, the second color dot is a white dot, the third color dot is a blue dot and the fourth color dot is a red dot.

10. The image data processing system according to Claim 8, wherein the image data processing system further comprises a display for displaying the third data.
